# FASCICULE DE BREVET EUROPEEN

(11) **EP 4 347 318 B1**
(45) Date de publication et mention de la délivrance du brevet: **12.11.2025**
(21) Numéro de dépôt: 22735532.8
(22) Date de dépôt: 26.04.2022
(51) Int. Cl.: B60R 16/02

(54) **DISPOSITIF DE BRIDAGE DE GAINES COMPORTANT DES MOYENS D'ÉVACUATION D'EAU**
HÜLLENKLEMMVORRICHTUNG MIT WASSERAUSLASSMITTELN
SHEATH CLAMPING DEVICE COMPRISING WATER DISCHARGE MEANS

(30) Priorité: 31.05.2021 FR 2105678
(43) Date de publication de la demande: 10.04.2024
(73) Titulaire: Stellantis Auto SAS, 78300 Poissy (FR)
(72) Inventeur: GOURVENNEC, Thibault, 91210 Draveil (FR); ROYER, Guillaume, 91680 Bruyères-le-Châtel (FR)
(74) Mandataire: BCIP
(86) Numéro de dépôt international: PCT/FR2022/050787
(87) Numéro de publication internationale: WO 2022/254111

(56) Documents cités:
- DE-A1- 102009 014 475
- FR-A1- 3 063 468

## Description

La présente invention revendique la priorité de la demande française 2105678 déposée le 31Mai 2021.

Le domaine technique concerne les dispositifs de bridage de gaines, les ensembles comportant un tel dispositif et au moins une gaine ainsi que les véhicules équipés de tels ensembles.

Dans les véhicules modernes l'aspect esthétique est particulièrement soigné par les constructeurs d'automobile. Les clients attendent d'un véhicule un niveau de finition de l'habitacle tel, qu'une tôle du châssis ne peut être visible dans l'habitacle et les éléments d'habillage sont omniprésents. Les attentes des clients ne s'arrêtent pas seulement à l'habitacle et ainsi ils apprécient que les éléments du compartiment moteur soient également habillés. Ainsi, la plupart des éléments du compartiment moteur sont dissimulés soigneusement sous divers éléments d'habillage présents dans le compartiment moteur. Ces éléments d'habillage sont parfois conçus pour fixer et guider diverses gaines tels que des faisceaux électriques et/ou des circuits de fluides. Outre l'aspect esthétique, la fixation des gaines permet d'éviter les déplacements et les vibrations de celles-ci. De plus, chaque gaine dispose de son cheminement bien défini, facilitant ainsi l'identification de chaque gaine en cas de dysfonctionnement et facilite la recherche des causes des disfonctionnement.

Le compartiment moteur d'un véhicule, notamment, n'est pas conçu pour être étanche aux projections d'eau provenant de l'extérieur, par exemple de la pluie ou de l'eau présente sur la voie de circulation du véhicule. Ainsi, la multiplication des éléments d'habillage augmente les surfaces sur lesquelles de l'eau de ruissèlement peut s'accumuler et occasionner des disfonctionnements.

Ainsi, il existe un besoin d'une solution pour éviter les accumulations d'eau de ruissèlement dans le compartiment moteur.

Le document FR 3 063 468 divulgue un dispositif de bridage selon le preambule de la revendication 1.

La présente invention a pour objet de pallier les problèmes exposés précédemment. Dans ce contexte technique, un but de la présente invention est de fournir un dispositif de bridage de gaines permettant d'évacuer l'eau de ruissèlement.

A cet effet, la présente invention se rapporte à un dispositif de bridage conçu pour guider et brider au moins une gaine, le dispositif comportant une platine conçue pour recouvrir au moins en partie une traverse de pare-chocs, la platine comprenant des moyens d'attache et de guidage conçus pour coopérer avec au moins une gaine pour maintenir chaque gaine et guider son cheminement le long de la traverse, la platine comportant en outre des moyens d'évacuation conçus pour guider de l'eau de ruissèlement susceptible de se répandre sur la platine et pour l'évacuer hors de la platine, afin d'éviter l'accumulation d'eau de ruissèlement autour d'une gaine attachée sur la platine. Les moyens d'évacuation (10) comportent au moins un orifice traversant ménagé dans la platine.

L'invention concerne également un ensemble comportant un dispositif selon l'invention et au moins une gaine attachée et guidée par les moyens d'attache et de guidage.

L'invention concerne également un véhicule comportant au moins un ensemble selon l'invention.

Ainsi, le dispositif selon l'invention est conçu pour habiller au moins en partie une traverse de pare-chocs. Les moyens d'attache et de guidage permettent de brider au moins une gaine et de guider son cheminement le long de la platine du dispositif. Les moyens d'évacuation sont conçus, quant à eux, pour guider de l'eau de ruissèlement présente sur la platine du dispositif et pour évacuer cette eau hors de la platine, évitant ainsi les accumulations d'eau autour d'une gaine d'un ensemble selon l'invention. Il est entendu par eau de ruissèlement de l'eau provenant de la pluie ou de projections depuis la voie de circulation, par exemple, par opposition à de l'eau utilisée ou nécessaire au fonctionnement du véhicule et habituellement contenue dans des canalisations.

Selon l'invention, les moyens d'évacuation comportent au moins un orifice traversant ménagé dans la platine. Un orifice traversant est simple à réaliser et permet d'évacuer efficacement de l'eau de ruissèlement.

Selon une possibilité, les moyens d'évacuation comportent une rigole ménagée dans la platine et conçue pour canaliser l'eau de ruissèlement. Une rigole est facilement obtenue par moulage. La rigole permet de guider efficacement de l'eau de ruissèlement susceptible d'être projetée sur la platine.

Selon un mode de réalisation, les moyens d'évacuation comportent au moins une nervure de renfort s'étendant sur une surface inclinée de la platine, lorsque le dispositif recouvre au moins en partie une traverse de pare-chocs.

Selon une possibilité, les moyens d'attache et de guidage comportent au moins un point de clipsage et/ou au moins un point de bridage ménagés sur la platine, conçus pour clipser, respectivement pour brider au moins une gaine.

Selon une possibilité, lorsque le dispositif comporte une rigole, les moyens d'attache et de guidage sont conçus pour guider au moins une gaine le long de la rigole. Selon un mode de réalisation, les moyens d'attache et de guidage sont conçus pour attacher et guider au moins un faisceau électrique.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective d'une traverse de pare-chocs habillée d'un dispositif selon l'invention ;
[Fig. 2] la figure 2, représente une vue de détails du dispositif de la figure 1 formant un ensemble avec une gaine électrique fixée sur le dispositif ;
[Fig. 3] la figure 3, représente une vue en perspective de détails du dispositif de la figure 1 montrant les moyens d'attache et de guidage ainsi que les moyens d'évacuation.

Dans ces figures, les mêmes références sont utilisées pour désigner les mêmes éléments.

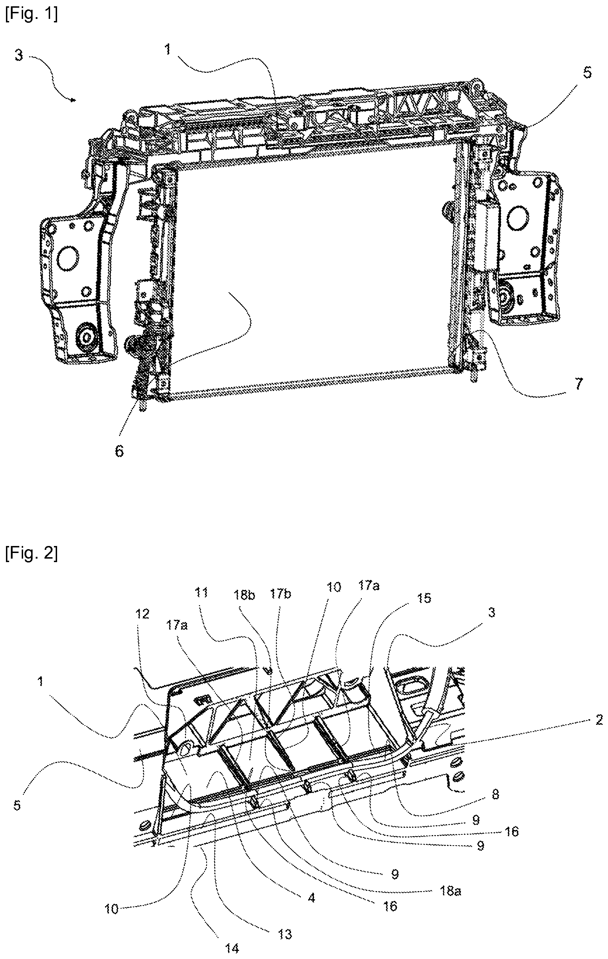

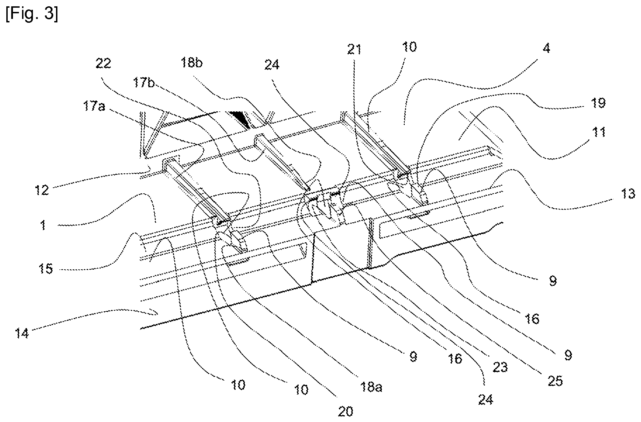

Un dispositif 1 de bridage selon l'invention est illustré sur les figures 1 à 3. Le dispositif 1 est conçu pour guider et brider au moins une gaine 2, illustrée sur la figure 2, pour former un ensemble 3 selon l'invention. Le dispositif 1 comporte une platine 4, illustrée sur les figures 2 et 3, conçue pour recouvrir au moins en partie une traverse 5 de pare-chocs, visible sur la figure 1. Comme illustré sur la figure 1, la platine 4 s'étend suivant une direction longitudinale, le long de la traverse 5 et assure l'habillage de la jonction entre la traverse 5 et un radiateur 6 du groupe moto-ventilateur du véhicule 7 selon l'invention, visibles sur la figure 1.

Le dispositif 1 est réalisé en plastique par exemple par moulage.

Dans le mode de réalisation de l'ensemble 3, illustré sur la figure 2, la gaine 2 est un faisceau électrique 8.

La platine 4 du dispositif 1, comprend des moyens d'attache et de guidage 9, illustrés sur les figures 2 et 3, conçus pour coopérer avec la gaine 2 pour maintenir la gaine 2 et guider son cheminement le long de la traverse 5.

La platine 4 comporte en outre des moyens d'évacuation 10 conçus pour guider de l'eau de ruissèlement susceptible de se répandre sur la platine 4 et pour l'évacuer hors de la platine 4, afin d'éviter l'accumulation d'eau de ruissèlement autour de la gaine 2 attachée sur la platine 4 à l'aide des moyens d'attache et de guidage 9.

La platine 4 comporte une surface inclinée 11 présentant une orientation, lorsque le dispositif 1 est monté sur la traverse 5, telle qu'elle permet l'écoulement d'eau de ruissèlement hors de la platine 4. A cette fin, la surface inclinée 11 s'étend depuis une première portion 12 de la platine 4, en appui contre la traverse 5, vers un bord libre 13 de la platine 4, délimitant une deuxième portion 14 de la platine 4 en appui sur le radiateur 6 et située à la jonction entre la surface inclinée 11 et la deuxième portion 14. Les moyens d'évacuation 10 comportent en outre une rigole 15 s'étendant suivant la direction longitudinale de la platine 4, le long du bord libre 13. De l'eau de ruissèlement projetée sur la surface inclinée 11 est ainsi amenée à ruisseler sur la surface inclinée 11, vers le bord libre 13, jusque dans la rigole 15. Les moyens d'évacuation 10 comportent également au moins un, en l'occurrence trois orifices traversant 16, ménagés avantageusement dans la rigole 15 afin d'évacuer l'eau de ruissèlement présente dans la rigole 15 hors de la platine 4.

Afin de consolider la surface inclinée 11, pour éviter sa déformation et la création de cuvettes préjudiciables à l'évacuation de l'eau de ruissèlement, les moyens d'évacuation 10 comportent au moins une, en l'occurrence trois nervures de renfort 17a, 17b s'étendant transversalement au dispositif 1, depuis la première portion 12 de la platine 4, vers la deuxième portion 14, jusqu'à une extrémité 18a, 18b. Une partie des nervures 17a présentent une extrémité 18a disposée sur le bord libre 13. L'autre partie des nervures 17b présentent une extrémité 18b disposée avant la rigole 15, c'est à dire entre la première portion 12 de la platine 4 et la rigole 15.

Les moyens d'attache et de guidage 9 comportent au moins un point de clipsage 19 ménagé sur la platine 4, conçus pour clipser une gaine 2. Les moyens de clipsage 19 sont formés par une un trou circulaire 20 traversant ménagé dans une nervure de renfort 17a, suivant l'axe longitudinal de la platine 4, dont une partie du pourtour 21, à l'opposé de la surface inclinée 11 crée une ouverture d'introduction 22 permettant d'introduire, par déformation, la gaine 2.

Les moyens d'attache et de guidage 9 comportent enfin au moins un point de bridage 23 ménagé sur la platine 4 disposé dans le prolongement d'une nervure 17b dont l'extrémité 18b est disposée avant la rigole 15. Le point de bridage 23 présente, d'une part, deux premières parois circulaires 24 espacées suivant la direction longitudinale de la platine 4 et, d'autre part, une deuxième paroi circulaire 25 disposée en regard des deux premières parois circulaires 24, les premières 24 et deuxièmes 25 parois circulaires étant disposées de part et d'autre de la rigole 15, afin de permettre le bridage de la gaine 2.

Ainsi, le dispositif 1 selon l'invention permet de brider et de guider au moins une gaine 2 le long du dispositif 1 tout en guidant et évacuant de l'eau de ruissèlement susceptible d'être projetée sur le dispositif 1.

L'invention ne se limite pas au mode de réalisation du dispositif décrit ci-avant, seulement à titre d'exemple, mais d'autres modes de réalisation peuvent être conçus par l'homme de métier sans sortir du cadre et de la portée de la présente invention définie dans les revendications annexées.

## Revendications

1. Dispositif (1) de bridage conçu pour guider et brider au moins une gaine (2), le dispositif (1) comportant une platine (4) conçue pour recouvrir au moins en partie une traverse (5) de pare-chocs, la platine (4) comprenant des moyens d'attache et de guidage (9) conçus pour coopérer avec au moins une gaine (2) pour maintenir chaque gaine (2) et guider son cheminement le long de la traverse (5), la platine (4) comportant en outre des moyens d'évacuation (10) conçus pour guider de l'eau de ruissèlement susceptible de se répandre sur la platine (4) et pour l'évacuer hors de la platine (4) afin d'éviter l'accumulation d'eau de ruissèlement autour d'une gaine (2) attachée sur la platine (4), **caractérisé en ce que** les moyens d'évacuation (10) comportent au moins un orifice traversant ménagé dans la platine (4).

2. Dispositif (1) selon la revendication 1, **caractérisé en ce que** les moyens d'évacuation (10) comportent une rigole (15) ménagée dans la platine (4) et conçue pour canaliser l'eau de ruissèlement.

3. Dispositif (1) selon l'une des revendications 1 ou 2, **caractérisé en ce que** les moyens d'évacuation (10) comportent au moins une nervure de renfort (17a, 17b) s'étendant sur une surface inclinée (11) de la platine (4), lorsque le dispositif (1) recouvre au moins en partie une traverse (5) de pare-chocs.

4. Dispositif (1) selon l'une des revendications 1 à 3, **caractérisé en ce que** les moyens d'attache et de guidage (9) comportent au moins un point de clipsage (19) et/ou au moins un point de bridage (23) ménagés sur la platine (4), conçus pour clipser, respectivement pour brider une gaine (2).

5. Dispositif (1) selon l'une des revendications 1 à 4, en combinaison avec la revendication 3, **caractérisé en ce que** les moyens d'attache et de guidage (9) sont conçus pour guider la gaine (2) le long de la rigole (15).

6. Dispositif (1) selon l'une des revendications 1 à 5, **caractérisé en ce que** les moyens d'attache et de guidage (9) sont conçus pour attacher et guider au moins un faisceau électrique (8).

7. Ensemble (3) comportant un dispositif (1) selon l'une des revendications 1 à 6 et au moins une gaine (2) attachée et guidée par les moyens d'attache et de guidage (9).

8. Véhicule comportant au moins un ensemble (3) selon la revendication 7.

## Patentansprüche

1. Klemmvorrichtung (1) zum Führen und Klemmen mindestens einer Hülse (2), wobei die Vorrichtung (1) eine Platte (4) aufweist, die dazu ausgebildet ist, eine Stoßstangentraverse (5) zumindest teilweise abzudecken, wobei die Platte (4) Befestigungsmittel und Führungsmittel (9) aufweist, die dazu ausgebildet sind, mit mindestens einer Hülse (2) zusammenzuwirken, um jede Hülse (2) zu halten und ihren Weg entlang der Traverse (5) zu führen, wobei die Platte (4) ferner Auslassmittel (10) aufweist, die dazu ausgebildet sind, Wasser zu leiten, das sich über die Platte ausbreiten kann Platine (4) und zum Abführen aus der Platine (4), um das Ansammeln von Rieselwasser um eine Hülle (2) zu vermeiden, die an der Platine (4) befestigt ist, **dadurch gekennzeichnet, dass** die Abführmittel (10) mindestens eine Durchgangsöffnung aufweisen, die in der Platine (4) ausgebildet ist.

2. Vorrichtung (1) nach Anspruch 1, **dadurch gekennzeichnet, dass** die Abführmittel (10) eine in der Platte (4) ausgebildete Rinne (15) umfassen, die zum Kanalisieren des Rieselwassers ausgebildet ist.

3. Vorrichtung (1) nach einem der Ansprüche 1 oder 2, **dadurch gekennzeichnet, dass** die Auslassmittel (10) wenigstens eine Verstärkungsrippe (17a, 17b) umfassen, die sich über eine geneigte Fläche (11) der Platte (4) erstreckt, wenn die Vorrichtung (1) wenigstens teilweise einen Stoßfängerquerträger (5) bedeckt.

4. Vorrichtung (1) nach einem der Ansprüche 1 bis 3, **dadurch gekennzeichnet, dass** die Befestigungs- und Führungsmittel (9) mindestens eine an der Platine (4) ausgebildete Einklipsstelle (19) und/oder mindestens eine Einklemmstelle (23) aufweisen, die zum Einklipsen bzw. Einklemmen einer Hülse (2) ausgebildet sind.

5. Vorrichtung (1) nach einem der Ansprüche 1 bis 4 in Kombination mit Anspruch 3, **dadurch gekennzeichnet, dass** die Befestigungs- und Führungsmittel (9) so ausgebildet sind, dass sie die Hülse (2) entlang der Rinne (15) führen.

6. Vorrichtung (1) nach einem der Ansprüche 1 bis 5, **dadurch gekennzeichnet, dass** die Befestigungs- und Führungsmittel (9) zum Befestigen und Führen mindestens eines elektrischen Bündels (8) ausgebildet sind.

7. Baugruppe (3) mit einer Vorrichtung (1) nach einem der Ansprüche 1 bis 6 und mindestens einer Hülse (2), die durch die Befestigungs- und Führungsmittel (9) befestigt und geführt ist.

8. Fahrzeug mit mindestens einer Anordnung (3) nach Anspruch 7.

## Claims

1. Clamping device (1) designed to guide and clamp at least one sheath (2), the device (1) comprising a plate (4) designed to cover at least partly a bumper cross-member (5), the plate (4) comprising attachment and guide means (9) designed to cooperate with at least one sheath (2) to hold each sheath (2) and guide its path along the cross-member (5), the plate (4) further comprising discharge means (10) designed to guide run-off water capable of spreading over the plate (4) and to evacuate it from the plate (4) in order to prevent the accumulation of run-off water around a sheath (2) attached to the plate (4), **characterised in that** the evacuation means (10) comprise at least one through orifice formed in the plate (4).

2. Device (1) according to Claim 1, **characterised in that** the discharge means (10) comprise a channel (15) formed in the plate (4) and designed to channel the run-off water.

3. Device (1) according to either of Claims 1 and 2, **characterised in that** the discharge means (10) comprise at least one reinforcing rib (17a, 17b) extending over an inclined surface (11) of the plate (4), when the device (1) at least partly covers a bumper cross-member (5).

4. Device (1) according to one of Claims 1 to 3, **characterised in that** the attachment and guide means (9) comprise at least one clipping point (19) and/or at least one clamping point (23) arranged on the plate (4), designed to clip, respectively to clamp a sheath (2).

5. Device (1) according to one of Claims 1 to 4, in combination with Claim 3, **characterised in that** the attachment and guide means (9) are designed to guide the sheath (2) along the channel (15).

6. Device (1) according to one of Claims 1 to 5, **characterised in that** the attachment and guide means (9) are designed to attach and guide at least one electrical harness (8).

7. Assembly (3) comprising a device (1) according to one of Claims 1 to 6 and at least one sheath (2) attached and guided by the attachment and guide means (9).

8. Vehicle comprising at least one assembly (3) according to claim 7.
